# EUROPEAN PATENT SPECIFICATION

(11) **EP 2 246 276 B1**
(45) Date of publication and mention of the grant of the patent: **06.03.2013**
(21) Application number: 10160715.8
(22) Date of filing: 22.04.2010
(51) Int. Cl.: B65G 47/14, B65G 47/24, B65G 47/244, B65G 47/252, B65G 47/30

(54) **Apparatus for automatically sorting out packaged pharmaceutical products**
Vorrichtung zur automatischen Sortierung von verpackten pharmazeutischen Produkten
Appareil de tri automatique de produits pharmaceutiques conditionnés

(30) Priority: 27.04.2009 IT TO20090329
(43) Date of publication of application: 03.11.2010
(73) Proprietor: Bertero Technologies S.A.S. di Bertero Sebastiano, 12100 Cuneo (IT)
(72) Inventor: Bertero, Sebastiano, I-12100, CUNEO (IT)
(74) Representative: Fioravanti, Corrado

(56) References cited:
- IT-B- 1 240 627
- JP-A- 59 230 914

## Description

The present invention refers to an apparatus for automatically sorting out packaged pharmaceutical products according to the preamble of claim 1 as disclosed in document IT 1240627 B.

The provision of the listed products in the pharmacy's order typically arrives in a single box, the content of which is to be sorted and orderly stored away while simultaneously updating the computerised database which in modem pharmacies is used to manage the stocks.

Recently, automatic sorting systems have been proposed using mechanically complex handling robots and video cameras to grasp and identify the pharmaceutical products through reading bar-codes located on the packages.

It is an object of the present invention to provide an automatic apparatus, which is mechanically simple, reliable and has low installation and maintenance costs.

According to the invention, such a purpose is achieved thanks to an apparatus having the technical features of the attached claim 1.

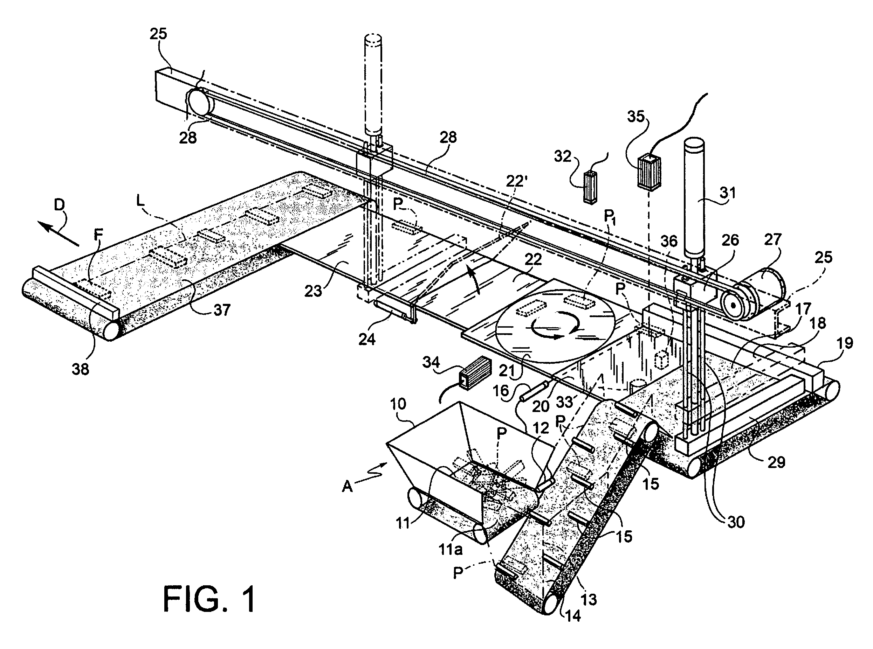

There will now be described a preferred but non-limiting embodiment of an apparatus according to the invention, schematically illustrated in the perspective view in the attached drawing.

An inlet station indicated A comprises a loading hopper 10 used as an inlet receptacle in which a multitude of parallelepiped-shaped packages P containing pharmaceutical products are randomly loaded, from above, each of which is labelled and carries a bar-code that, as it is known, provides information which can be read by optical devices relative to the drug.

In the apparatus of the present invention the single packages are handled, identified and transferred, one at a time, from the loading hopper to a final output station; here each package must be positioned precisely and oriented in a predetermined manner so it can be correctly taken by a handling robot, which withdraws the single package and replaces it orderly and selectively on a predetermined shelf of the pharmacy warehouse.

The bottom of the hopper 10 is made up of a first horizontal belt conveyor 11, the upper branch of which moves towards one end 11a of the conveyor at which a photoelectric cell 12 is provided. The various packages of pharmaceutical products, received by the chemist following a previous order, are tipped into the hopper 10. By pressing a cycle start button (not illustrated) an electric motor is actuated which drives the belt 11.

When a package comes near to the edge 11a, the photocell 12 detects it and emits an electrical signal that causes the belt to slow down. This is done to carry out a first rough separation of the packages, making them fall one at a time over the edge 11a into a receptacle 13.

The bottom of the receptacle 13 is made up of a second considerably inclined belt conveyor 14 (by an angle of about 40° in the illustrated example) and provided with transverse flights 15, preferably equally spaced apart along the lengthwise direction of the belt. According to one embodiment of the invention, the flights 15 are oriented perpendicular to the movement direction of the belt 14.

The sloping belt conveyor 14 is advantageously a belt of rubber-coated fabric and, according to one embodiment of the invention, the consecutive flights are transversally offset with respect to one another and have different lengths so that each one is able to steadily retain and take only one package at a time. For this purpose, each flight preferably extends for a fraction of the transversal width of the belt 14, and is located on one of the two sides of the belt or centrally, but does not extend for the entire transversal width. In this way, those packages that are not stably held on a flight slide down to the bottom of the receptacle and stay there until they are intercepted by a flight passing by where the package is located and collects it, bringing it to the top of the belt. The packages thus reach the top of the second belt individually, one at a time.

At the top of the belt conveyor with flights there is provided at least one further photocell

(not illustrated) which, blocked off by the passing package, causes the belt conveyor with flights to temporarily stop so as to delay the arrival of other packages brought up by following flights. The signal generated by such a photocell simultaneously starts up, for a predetermined number of seconds, a third horizontal belt conveyor 17 on which the package P is transferred. The third belt brings the package to abut against the vertical side 18 of a rectilinear bar 19 that extends horizontally according to one direction substantially perpendicular to the third belt 17. The continuous movement of this belt forces the package to be located with one of its six faces against the vertical side 18 of the bar 19, and thus in a predetermined fixed vertical plane.

The fixed bar 19 extends beyond the third horizontal belt, along one side of a transparent plate 20 arranged adjacent and flush with the upper horizontal portion of the belt 17, in a direction here defined "longitudinal". This direction is perpendicular to the direction of advancement of the third belt 17. Adjacent to the transparent plate 20, on the other side of the belt 17, a horizontal table 21 is arranged and rotatable about a vertical axis. By its side, in the longitudinal direction, there is provided a plane 22 tilting about a transversal horizontal axis; the tilting plane 22 is hinged to a fixed horizontal bench 23, and it is associated with a pneumatic actuator 24 capable of tilting the plane 22 in order to bring it from a horizontal position (illustrated with a full line), flush with the rotatable table 21 and the bench 23, to an upwardly inclined position (broken line 22'), as explained herein after.

A rectilinear guide (illustrated only partially for the sake of clarity) that extends parallel to the longitudinal bar 19, is indicated with reference numeral 25. The guide 25 extends above the belt 17, the transparent plate 20, the rotatable table 21, the tilting plane 22, the bench 23, up to a final belt conveyor 37. Along the guide 25 a pusher unit runs essentially comprising a sledge 26 and a transverse bar 29. The sledge 26 is driven longitudinally by an electric motor 27 through a toothed belt 28. The motor 27 is associated with an encoder (not illustrated) to precisely control the longitudinal position of the sledge. The sledge supports the mobile bar 29, which substantially extends transversally for the entire width of the belt 17 and the surfaces of the flat elements 20-23. As well as being longitudinally translatable together with the sledge 26, the bar 29 can also be raised and lowered along a pair of vertical shafts 30 supported by the sledge 26. The vertical sliding movements of the bar 29 are caused by a pneumatic piston 31, also carried by the sledge 26 and next to the shafts 30.

The final belt conveyor 37 horizontally transfers the packages P, previously oriented in a correct manner, against a stopping bar 38 that defines the final output station from which the individual packages are taken by the handling robot (not illustrated).

The mobile bar 29 is used to push the package forwards (but also backwards, as described later) from the belt 17 to the final belt conveyor 37. Before reaching the bench 23, the individual package is handled so as to allow it to be identified, by reading its bar code. As mentioned above, the package must then be placed on the output bench 23 oriented so that the face having the smallest area is oriented vertically and faces or is directed longitudinally towards the handling robot that takes it. In order to carry out these operations, the apparatus must be able to scan all six faces of the parallelepiped-shaped package, since the bar-code is located on only one of them. In order to have the package oriented in the desired way, the apparatus must be able to rotate and, if necessary, tilt the package in a suitable way. In order to do this, the apparatus must detect the dimensions of the package, so as to "know" how it is oriented when it arrives on the belt 17 abutting against the fixed bar 19, and thus carry out the rotation and tilting movements that may be necessary.

The bar-codes are read by three laser sensors, whereas the dimensions of the package are detected by a pair of sonar devices and by a photocell 36 arranged under the transparent plate 20, as explained later on. The identification data of the drug (obtained from reading the bar-code) and the size information of the package, indicative of the orientation of the package, are provided to a processing unit not illustrated, typically a PLC (or *Programmable Logic Controller*) or a PC (*Personal Computer*). This unit matches the data detected by the laser readers and by the sonar sensors and compares the data with a memory containing the size data of the various packages of pharmaceutical products on the market. The processing unit is thus able to recognize the product and the instantaneous orientation of the package, and thus to drive all motor/actuator members described hereby so as to bring the package onto the output bench 23 as planned. The same processing unit also supervises the operation of the handling robot that takes the package from the bench 23 and positions it on the appropriate shelf of the warehouse.

The pusher unit comprising the mobile bar 29 longitudinally moves the package forwards above the horizontal belt 17, which continues to circulate, thus keeping the package in contact with the fixed bar 19. In the drawing, the pushing unit is illustrated in phantom in different positions it can take.

A first sonar 16 is oriented for detecting the transversal size of the package that is next to the fixed bar 19. The sonar directs its own acoustic signal against the vertical surface of the bar 19, and, when a package is intercepted, it emits a signal generated by the sound wave (or echo) reflected from the package. This signal is provided to the processing unit to calculate the size of the package in the transverse direction. The sonar 31 is advantageously oriented for detecting the transversal dimension at a point situated downstream of the belt conveyor 17, where the package rests on the surface of the fixed transparent plate 20. Since the latter is immobile, it allows a more accurate measuring than that which could be carried out with the package placed on the moving surface of the belt 17.

Pushed by the mobile bar 29, the package P passes over the transparent plate 20. During this movement, the package passes above the photocell 36 that detects when the package begins and ends passing. The signals generated by this photocell are processed together with data concerning the angular position of the encoder associated with the electric motor 27 that cause the sledge to translate longitudinally. The processing unit is thus able to acquire the data relative to the dimensions of the package in the longitudinal direction. While the package transits along the transparent plate 20, two laser readers 32, 33 arranged above and below the plate, respectively, scan the upper and lower surfaces of the package to read the bar-code. In order for the laser beams to read the bar-code, both laser readers are mounted (in a *per se* known way) on oscillating heads and driven to each carry out two scans, one after the other, oscillating by a predetermined angle in two different oscillation planes, perpendicular to the longitudinal direction and to the transversal direction, respectively. As an alternative to the configuration illustrated herein, each of the rotatable lasers 32, 33 can be replaced by a respective pair of fixed laser readers, with oscillating mirrors, perpendicular to one another.

The package then reaches the rotatable table 21, next to which a third laser reader 34 is arranged, which is able to read the bar-code if this is shown on one of the four side faces of the package. The reader 34 is also mounted on an oscillating head in two perpendicular planes. In the case in which the code has already been read by one of the two laser readers arranged upstream (32 or 33), the reader 34 is not activated. Above the rotatable table 21 (or above the transparent plate 20), a second sonar 35 is arranged, oriented vertically for detecting the height of the package located on the table 21 (or on the plate 20).

If the bar-code is not read, or if the size data detected does not correspond to that stored in the processing unit, it may be that the package is no longer intact, or that the database of the processing unit needs to be updated. In such cases the pneumatic actuator 24 is automatically activated to raise the tilting plane 22 and the pushing unit is moved forwards to make the package fall into a collecting container (not illustrated) below the tilting plane 22. The chemist periodically inspects the packages of the products which have ended up in such a container.

The pharmaceutical products are generally managed according to FIFO storage methods (First In First Out) so as to optimize the warehouse stock according to the expiry dates of the drugs. There is a great need to exploit the space available on the shelves of the warehouse in the best way possible, by arranging the packages of products according to criteria that are not mentioned hereby. For this purpose, it is advantageous if the packages are available oriented so that their face with the smallest area is vertical and faces the handling robot which must take it, and its face having the greatest surface is laying on the resting plane, in the final output station.

If at the end of the scanning and measuring operations the package is already oriented in the desired way, the pushing unit leaves the package P on the final belt conveyor 37 in a predetermined position, for example at a level of an ideal line indicated with L. The belt 37 thus provides for transferring the package into the final output position indicated with F. Here, the packages are all precisely oriented and arranged with their smallest faces vertical and facing the direction indicated by the arrow D. The pusher unit then returns to its position arranged farther "upstream" near to the belt conveyor 17 so as to be ready to treat the following package fed by the belt conveyor 14 with flights.

If, on the other hand, the package arranged next to the fixed bar 19 is not oriented in the desired manner, in some cases the package must simply be rotated keeping it on the same resting face, whereas in other cases it is also necessary to turn the package to make it rest on another one of its faces.

In order to rotate the package around a same face the pusher unit must bring it onto the rotatable table, which must be rotated by an angle of ± 90° or 180°, according to the case, so as to orient the package as indicated in the position P1. Once the desired orientation has been achieved, the pusher unit longitudinally drags the package until it reaches the level of the line L on the final belt conveyor 37. From here, the belt 37 brings the package into the output station F.

In order to turn the package on another face, the pusher unit makes the package move forwards until it brings its foremost side to the transverse hinging axis of the tilting plane 22. The pneumatic actuator 24 is then actuated to raise the plane 22, inclining it by about 90° so as to cause the package, which is now resting on another one of its faces, to tilt. The pusher unit then brings the package back onto the rotatable table 21; this is rotated by ± 90°, according to the case, and then pushed up to the line L, analogously to what has been described in the previous paragraph.

As it will be appreciated, the present invention makes it possible to identify and sort virtually any kind of drug by using mechanically simple and reliable moving devices.

It should be clear that the invention is not limited to the embodiment described and illustrated hereby, which should be considered as an example; the invention may also undergo modifications relative to shape, sizes, arrangement of parts, constructional and operational details falling within the scope of protection described by the appended claims.

## Claims

1. Apparatus for automatically sorting out packaged pharmaceutical products, the apparatus comprising
- a set of handling means (11, 14, 17, 21, 22, 23, 25, 37) for taking pharmaceutical packages (P) from an inlet receptacle (13) where different kinds of packages are put randomly and transferring the packages along a given path to a final output station where the packages (P) are to be individually positioned and oriented in a predetermined manner, and
- a plurality of bar-code readers (34) located along said path, for identifying the pharmaceuticals;
whereby the apparatus comprises a package orientation station including a horizontal belt conveyor (17) associated with a fixed, rectilinear abutment surface (18); **characterised in that** the abutment surface (18) extends in a direction substantially perpendicular to the direction of advancement of the horizontal belt conveyor (17), whereby the motion of the horizontal belt (17) causes one face of each pack-age (P) to abut against the fixed abutment surface (18).

2. Apparatus according to claim 1, **characterised in that** a sloping belt conveyor (14) is provided between the inlet receptacle and the orientation station, the belt conveyor (14) having flights (15) perpendicular to the direction of advancement of the sloping belt conveyor (14).

3. Apparatus according to claim 2, **characterised in that**
- the flights (15) extend only along a fraction of the transversal width of the sloping belt conveyor (14), whereby each flight is able to retain steadily and transfer only one package (P) at a time, and that
- two consecutive flights are transversally offset relative to one another.

4. Apparatus according to claim 3, **characterised in that** two consecutive flights (15) have different transversal sizes.

5. Apparatus according to any one of claims 2 to 4, **characterised in that** the belt conveyor (14) with the flights (15) includes a belt of rubber-coated fabric inclined at an angle of about 40° to the horizontal.

6. Apparatus according to claim 1, **characterised in that** the abutment surface (18) is provided by a vertical side of a fixed rectilinear bar (19) extending beyond the horizontal belt conveyor (17), along a side of a transparent plate (20) located adjacent and flush with the belt conveyor (17) and immediately downstream thereof.

7. Apparatus according to claim 1 or 6, **characterised in that** a first sonar device (16) for detecting the transversal sizes of the packages (P) is oriented towards the vertical abutment surface (18).

8. Apparatus according to claims 6 and 7, **characterised in that** the first sonar device (16) is oriented towards a portion of the vertical abutment surface (18) located at the transparent plate (20).

9. apparatus according to claim 6, **characterised in that** at least one laser reader (33) for bar-code reading is located underneath the transparent plate (20).

10. Apparatus according to claim 6, **characterised in that** a horizontal table (21) rotatable about a vertical axis is located immediately downstream of the transparent plate (20).

11. Apparatus according to claim 10, **characterised in that** at least one laser reader (34) for bar-code reading is located next to the rotatable table (21).

12. Apparatus according to claim 10, **characterised in that** mounted downstream of the rotatable table (21) is a plane (22) tilting about a transversal horizontal axis and hinged to a fixed horizontal bench (23), the tilting plane being associated with an actuator (24) capable of tilting the plane (22) between a horizontal position, flush with the rotatable table (21) and the bench (23), and an upwardly inclined position (22').

13. Apparatus according to one or more of the preceding claims, further comprising a final, horizontal belt conveyor (37) moving transversally with respect to the direction in which the fixed abutment surface (18) extends, the final belt conveyor being associated with a fixed stopping surface (38) extending in a direction substantially perpendicular to the direction of advancement of the final belt conveyor (37), whereby the motion of the final belt conveyor (37) brings a face of each package (P) to abut against the stopping surface (38) in a final position from where the package may be taken away.

14. Apparatus according to claim 13, further including a pushing unit for pushing horizontally the packages in given directions parallel to that in which the fixed abutment surface (18) extends, the pushing unit comprising:
- a rectilinear supporting guide (25) which extends, parallel to said given directions, along a side of the belt conveyor (17), the transparent plate (20), the rotatable table (21), the tilting plane (22), the fixed bench (23), up to the final belt conveyor (37);
- a sledge (26) driven for sliding along the guide (25);
- a rectilinear, transversally extended member (29), longitudinally translatable together with the sledge (26);
- an actuator (31), carried by the sledge (26), for moving the transversal member (29) vertically.

## Patentansprüche

1. Vorrichtung zum automatischen Aussortieren verpackter pharmazeutischer Produkte, welche Vorrichtung aufweist
- einen Satz Handhabungseinrichtungen (11, 14, 17, 21, 22, 23, 25, 37) zum Entnehmen von pharmazeutischen Packungen (P) aus einem Eingangsbehältnis (13), in das verschiedene Typen von Packungen ungeordnet hineingegeben sind, und Verbringen der Packungen entlang einem vorgegebenen Weg zu einer abschließenden Ausgabestation, wo die Packungen (P) individuell zu positionieren und in vorbestimmter Weise zu orientieren sind, und
- eine Mehrzahl Strichcode-Lesegeräte (34) zum Identifizieren der Pharmazeutika, die entlang diesem Weg angeordnet sind;
wobei die Vorrichtung eine Packungsausrichtungsstation mit einem horizontalen Riemenförderer (17) aufweist, der mit einer festen geradlinigen Anschlagoberfläche (18) in Verbindung steht;
**dadurch gekennzeichnet, dass** sich die Anschlagoberfläche (18) in einer zu der Richtung der Bewegung des horizontalen Riemenförderers (17) im Wesentlichen senkrechten Richtung erstreckt, wobei die Bewegung des horizontalen Riemens (17) bewirkt, dass eine Seite jeder Packung (P) gegen die feste Anschlagoberfläche (18) stößt.

2. Vorrichtung nach Anspruch 1, **dadurch gekennzeichnet, dass** zwischen dem Eingangsbehältnis und der Ausrichtungsstation ein schräg verlaufender Riemenförderer (14) vorgesehen ist, der zu der Bewegungsrichtung des schräg verlaufenden Riemenförderers (14) senkrechte Riegel (15) aufweist.

3. Vorrichtung nach Anspruch 2, **dadurch gekennzeichnet, dass**
- sich die Riegel (15) nur entlang einem Anteil der Querbreite des schräg verlaufenden Riemenförderers (14) erstrecken, wobei jeder Riegel nur eine Packung (P) gleichzeitig aufnehmen und verbringen kann, und dass
- zwei aufeinander folgende Riegel relativ zueinander quer versetzt sind.

4. Vorrichtung nach Anspruch 3, **dadurch gekennzeichnet, dass** zwei aufeinander folgende Riegel (15) unterschiedliche Quermaße haben.

5. Vorrichtung nach einem der Ansprüche 2 bis 4, **dadurch gekennzeichnet, dass** der Riemenförderer (14) mit den Riegeln (15) einen Riemen aus gummibeschichtetem Textil aufweist, der in einem Winkel von ungefähr 40° zur Horizontalen geneigt ist.

6. Vorrichtung nach Anspruch 1, **dadurch gekennzeichnet, dass** die Anschlagoberfläche (18) durch eine vertikale Seite eines festen geradlinigen Stabes (19) gebildet ist, der sich über den horizontalen Riemenförderer (17) hinaus erstreckt, und zwar entlang einer Seite einer transparenten Platte (20), die benachbart und bündig zu dem Riemenförderer (17) und unmittelbar stromabwärts dazu angeordnet ist.

7. Vorrichtung nach Anspruch 1 oder 6, **dadurch gekennzeichnet, dass** eine erste Sonareinrichtung (16) zum Erfassen der Quermaße der Packungen (P) auf die vertikale Anschlagoberfläche (18) zu ausgerichtet ist.

8. Vorrichtung nach Anspruch 6 und 7, **dadurch gekennzeichnet, dass** die erste Sonareinrichtung (16) auf einen Abschnitt der vertikalen Anschlagoberfläche (18) zu ausgerichtet ist, der an der transparenten Platte (20) angeordnet ist.

9. Vorrichtung nach Anspruch 6, **dadurch gekennzeichnet, dass** zumindest ein Laser-Lesegerät (33) zum Strichcode-Auslesen unter der transparenten Platte (20) angeordnet ist.

10. Vorrichtung nach Anspruch 6, **dadurch gekennzeichnet, dass** ein horizontaler Tisch (21), der um eine vertikale Achse drehbar ist, unmittelbar stromabwärts von der transparenten Platte (20) angeordnet ist.

11. Vorrichtung nach Anspruch 10, **dadurch gekennzeichnet, dass** zumindest ein Laser-Lesegerät (34) zum Strichcode-Auslesen zu dem drehbaren Tisch (21) benachbart angeordnet ist.

12. Vorrichtung nach Anspruch 10, **dadurch gekennzeichnet, dass** stromabwärts von dem drehbaren Tisch (21) eine Ebene (22) montiert ist, die um eine horizontale Querachse kippt und an einer festen horizontalen Bank (23) angelenkt ist, wobei die Kippebene mit einem Betätigungselement (24) in Verbindung steht, das die Ebene (22) zwischen einer horizontalen und zu dem drehbaren Tisch (21) und der Bank (23) bündigen Position und einer nach oben geneigten Position (22') verkippen kann.

13. Vorrichtung nach einem oder einer Mehrzahl der vorstehenden Ansprüche, ferner mit einem abschließenden horizontalen Riemenförderer (37), der sich in Bezug auf die Richtung, in der sich die feste Anschlagsoberfläche (18) erstreckt, quer bewegt, wobei der abschließende Riemenförderer mit einer festen Stoppoberfläche (38) in Verbindung steht, die sich in einer zu der Bewegungsrichtung des abschließenden Riemenförderers (37) im Wesentlichen senkrechten Richtung erstreckt, wobei die Bewegung des abschließenden Riemenförderers (37) eine Seite jeder Packung (P) zum Anstoßen gegen die Stoppoberfläche (38) in einer Endposition bringt, aus der die Packung entnommen werden kann.

14. Vorrichtung nach Anspruch 13, ferner mit einer Schiebeeinheit zum horizontalen Schieben der Packungen (P) in gegebenen Richtungen parallel zu der, in der sich die feste Anschlagoberfläche (18) erstreckt, wobei die Schiebeeinheit aufweist:
- eine geradlinige Tragführung (25), die sich parallel zu den gegebenen Richtungen entlang einer Seite des Riemenförderers (17), der transparenten Platte (20), des drehbaren Tisches (21), der Kippebene (22), der festen Bank (23) bis zu dem abschließenden Riemenförderer (37) erstreckt;
- einen Schlitten (26), der hinsichtlich einer Verschiebung entlang der Führung (25) angetrieben ist;
- ein geradliniges, sich quer erstreckendes Element (29), das zusammen mit dem Schlitten (26) längs verschieblich ist;
- ein Betätigungselement (31), das von dem Schlitten (26) gehalten ist, zum vertikalen Bewegen des Querelements (29).

## Revendications

1. Appareil de tri automatique pour produits pharmaceutiques conditionnés, l'appareil comprenant :
un ensemble de moyens de manipulation (11, 14, 17, 21, 22, 23, 25, 37) pour prendre des emballages pharmaceutiques (P) d'un réceptacle d'entrée (13) où différents types d'emballages sont placés de manière aléatoire et transférer les emballages le long d'une trajectoire donnée jusqu'à une station de sortie finale où les emballages (P) doivent être positionnés individuellement et orientés d'une manière prédéterminée, et
une pluralité de lecteurs de codes à barres (34), positionnés le long de ladite trajectoire, pour identifier les produits pharmaceutiques ;
moyennant quoi l'appareil comprend une station d'orientation d'emballage comprenant une courroie transporteuse horizontale (17) associée avec une surface de butée rectiligne fixe (18) ; **caractérisé en ce que** la surface de butée (18) s'étend dans une direction sensiblement perpendiculaire par rapport à la direction d'avancement de la courroie transporteuse horizontale (17), moyennant quoi le mouvement de la courroie horizontale (17) amène une face de chaque emballage (P) à venir en butée contre la surface de butée fixe (18).

2. Appareil selon la revendication 1, **caractérisé en ce qu'**une courroie transporteuse inclinée (14) est prévue entre le réceptacle d'entrée et la station d'orientation, la courroie transporteuse (14) ayant des déflecteurs (15) perpendiculaires à la direction d'avancement de la courroie transporteuse inclinée (14).

3. Appareil selon la revendication 2, **caractérisé en ce que** :
les déflecteurs (15) s'étendent uniquement le long d'une partie de la largeur transversale de la courroie transporteuse inclinée (14), moyennant quoi chaque déflecteur peut retenir sans interruption et transférer un seul emballage (P) à la fois, et **en ce que** :
deux déflecteurs consécutifs sont décalés transversalement l'un par rapport à l'autre.

4. Appareil selon la revendication 3, **caractérisé en ce que** deux déflecteurs (15) consécutifs ont des tailles transversales différentes.

5. Appareil selon l'une quelconque des revendications 2 à 4, **caractérisé en ce que** la courroie transporteuse (14) avec les déflecteurs (15) comprend une courroie de tissu recouverte de caoutchouc inclinée selon un angle d'environ 40° par rapport à l'horizontale.

6. Appareil selon la revendication 1, **caractérisé en ce que** la surface de butée (18) est prévue par un côté vertical d'une barre rectiligne fixe (19) s'étendant au-delà de la courroie transporteuse horizontale (17), le long d'un côté d'une plaque transparente (20) positionnée de manière adjacente et de niveau avec la courroie transporteuse (17) et immédiatement en aval de cette dernière.

7. Appareil selon la revendication 1 ou 6, **caractérisé en ce qu'**un premier dispositif de sonar (16) pour détecter les tailles transversales des emballages (P) est orienté vers la surface de butée verticale (18).

8. Appareil selon les revendications 6 et 7, **caractérisé en ce que** le premier dispositif de sonar (16) est orienté vers une partie de la surface de butée verticale (18) positionnée au niveau de la plaque transparente (20).

9. Appareil selon la revendication 6, **caractérisé en ce que** le au moins un lecteur laser (33) pour lire des codes à barres est positionné au-dessous de la plaque transparente (20).

10. Appareil selon la revendication 6, **caractérisé en ce qu'**une table horizontale (21) pouvant tourner autour d'un axe vertical, est positionnée immédiatement en aval de la plaque transparente (20).

11. Appareil selon la revendication 10, **caractérisé en ce qu'**au moins un lecteur laser (34) pour lire des codes à barres est positionné à côté de la table rotative (21).

12. Appareil selon la revendication 10, **caractérisé en ce que**, monté en aval de la table rotative (21), on trouve un plan (22) s'inclinant autour d'un axe horizontal transversal et articulé par rapport à un banc horizontal fixe (23), le plan incliné étant associé à un actionneur (24) capable d'incliner le plan (22) entre une position horizontale, de niveau avec la table rotative (21) et le banc (23), et une position inclinée vers le haut (22').

13. Appareil selon l'une ou plusieurs des revendications précédentes, comprenant en outre une courroie transporteuse horizontale finale (37) se déplaçant de manière transversale par rapport à la direction dans laquelle la surface de butée fixe (18) s'étend, la courroie transporteuse finale étant associée à une surface d'arrêt fixe (38) s'étendant dans une direction sensiblement perpendiculaire à la direction d'avancement de la courroie transporteuse finale (37), moyennant quoi le mouvement de la courroie transporteuse finale (37) amène une face de chaque emballage (P) à venir en butée contre la surface d'arrêt (38) dans une position finale à partir de l'endroit où l'emballage peut être enlevé.

14. Appareil selon la revendication 13, comprenant en outre une unité de poussée pour pousser horizontalement les emballages dans des directions données parallèles à celle dans laquelle la surface de butée fixe (18) s'étend, l'unité de poussée comprenant :
un guide de support rectiligne (25) qui s'étend, parallèle auxdites directions données, le long d'un côté de la courroie transporteuse (17), la plaque transparente (20), la table rotative (21), le plan incliné (22), le banc fixe (23), jusqu'à la courroie transporteuse finale (37) ;
une coulisse (26) entraînée pour coulisser le long du guide (25) ;
un élément rectiligne étendu de manière transversale (29), pouvant effectuer un mouvement de translation longitudinale conjointement avec la coulisse (26) ;
un actionneur (31), supporté par la coulisse (26), pour déplacer verticalement l'élément transversal (29).
